# EUROPEAN PATENT APPLICATION

(11) **EP 1 652 577 A1**
(43) Date of publication of application: **03.05.2006**
(21) Application number: 05020522.8
(22) Date of filing: 20.09.2005
(51) Int. Cl.: B01J 19/00, B81C 1/00

(54) **Micro channel structure and method of manufacturing the same**

(30) Priority: 26.10.2004 JP 2004310730
(71) Applicant: Dainippon Screen Mfg. Co., Ltd., Kyoto 602-8585 (JP)
(72) Inventor: Miyake, Takashi c/o Dainippon Screen Mfg. Co., Ltd, Horikawa-dori Kamikyo-ku Kyoto 602-8585 (JP); Nishikubo, Hiroaki c/o Dainippon Screen Mfg.Co.Ltd, Horikawa-dori Kamikyo-ku Kyoto 602-8585 (JP)
(74) Representative: Kilian, Helmut

(57) **Abstract**

In a microreactor, a groove is formed by a first substrate (11) and an intermediate substrate (12) layered on the first substrate (11), and an opening of the groove is closed by a second substrate (13) serving as a lid member to form a micro channel in which fluids flow. The intermediate substrate (12) comprises a channel area (120) including a through hole forming part of the micro channel and a plate-like connecting portion (122) which is thinner than parts on both sides of the channel area (120), for connecting the parts on both sides in a predetermined position of the micro channel in a longitudinal direction. In the microreactor, it is possible to easily handle the intermediate substrate (12) as one member in forming and handling the intermediate substrate (12) and simplify a process of manufacturing the microreactor.

## Description

### BACKGROUND OF THE INVENTION

### Field of the Invention

The present invention relates to a channel structure having a groove forming a channel and a method of manufacturing the same.

### Description of the Background Art

In the fields of chemical synthetic reaction, biochemical reaction and the like, conventionally, a microreactor having micro channels has been used as a microvessel for reaction of a very small quantity of sample fluids. Japanese Patent Application Laid Open Gazette No. 10-337173, for example, discloses a microreactor in which channels are formed in a silicon substrate by anisotropic etching and its surface is covered by a flat plate. In such a microreactor, sample fluids are fed from a plurality of injection ports and mixed to react in the channels and a reactant is taken out from an exhaust port. Japanese Patent Application Laid Open Gazette No. 2002-27984 discloses a technique to prolong a mixture time of the sample fluids by so forming the channels as to meander.

Japanese Patent Application Laid Open Gazette No. 2002-27984 discloses a technique in which a plurality of divided channels in each of which either of two kinds of sample fluids flows are alternately arranged and joined and the two kinds of layer-like sample fluids are alternately layered a plurality of times in a mix channel to efficiently make a mixture of samples in the layers for a short time. Japanese Patent Application Laid Open Gazette No. 11-512645 discloses a technique to improve the mixture efficiency, where a mix channel is vertically divided and joined again to increase the number of layers of sample fluids. On the other hand, Japanese Patent Application Laid Open Gazette No. 2004-33907 discloses a technique to form a channel of a microreactor by layering a plurality of substrates for channel, having through holes, which are held by a bottom plate and a lid plate. Japanese Patent Application Laid Open Gazettes Nos. 2004-124918 and 2002-361261 disclose a technique to reform fluids flowing in a conduit line.

In the case of forming a micro channel using the substrates for channel having the through holes, there sometimes arises a problem in handling the substrates for channel, such as forming and layering these substrates. In forming the meandering channel, for example, there is a possibility that a cantilever-like portion held by meandering through holes may be deformed. In forming the divided channels, there is a possibility that a portion between a plurality of through holes may be separated from the substrate for channel around it.

### SUMMARY OF THE INVENTION

The present invention is intended for a channel structure having a groove which is closed by a lid member to form a channel, and it is an object of the present invention to easily handle a member having a through hole for channel as one member and simplify a process of manufacturing the channel structure.

The present invention relates to a channel structure having a groove which is closed by a lid member to form a channel. According to the present invention, the channel structure comprises a plate-like or sheet-like base member perpendicular to a predetermined layer direction, and a plate-like or sheet-like intermediate member having a channel area including a through hole formed in the layer direction to form at least part of a groove, and the intermediate member is layered on the base member, whereby one opening of the channel area is closed, and in the channel structure, the intermediate member comprises a plate-like connecting portion for connecting parts on both sides of the channel area in a predetermined position in a longitudinal direction of the groove, and the connecting portion is thinner than the parts on both sides.

The present invention makes it possible to easily handle the intermediate member having the channel area including the through hole as one member and consequently simplify a process of manufacturing the channel structure.

According to one preferred embodiment of the present invention, the connecting portion is formed by etching in forming the intermediate member and one main surface of the connecting portion is positioned on the same plane as main surfaces of the parts on both sides.

According to another preferred embodiment of the present invention, two independent member elements including the parts on both sides, respectively, are connected only by at least one plate-like connecting portion for connecting the parts on both sides, which is thinner than the parts on both sides.

According to still another preferred embodiment of the present invention, the channel structure further comprises a lid member layered directly or indirectly on the intermediate member on its side opposite to the base member, for closing an opening of the groove, and the lid member comprises a recessed portion forming at least part of a channel together with the groove. It is thereby possible to make the channel structure thinner.

According to an aspect of the present invention, the channel structure further comprises a translucent lid member layered directly or indirectly on the intermediate member on its side opposite to the base member, for closing an opening of the groove. It is thereby possible to emit light to the fluids in the channel.

According to another aspect of the present invention, the channel structure further comprises a magnetic field generation part for applying a magnetic field to at least part of the groove. It is thereby possible to reduce the cluster size of fluids flowing in the channel.

The present invention is also intended for a method of manufacturing a channel structure having a groove which is closed by a lid member to form a channel.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a cross section showing a basic structure of a micro channel structure;
Fig. 2 is a plan view showing a micro channel structure in accordance with a first
preferred embodiment;
Figs. 3 and 4 are partially sectional views each showing a microreactor;
Fig. 5 is a plan view showing an intermediate substrate;
Fig. 6 is a partially sectional view showing the microreactor;
Fig. 7 is a flowchart showing process steps for manufacturing the microreactor;
Fig. 8 is a flowchart showing process steps for forming the intermediate substrate;
Figs. 9 and 10 are partially sectional views each showing the intermediate substrate;
Fig. 11 is a partially sectional view showing a microreactor in accordance with a second preferred embodiment;
Fig. 12 is an elevational view showing a microreactor in accordance with a third preferred embodiment;
Fig. 13 is an elevational view showing another example of the microreactor;
Figs. 14 and 15 are partially sectional views each showing another example of the micro channel structure; and
Figs. 16 and 17 are plan views each showing another intermediate substrate.

### DESCRIPTION OF THE PREFERRED EMBODIMENTS

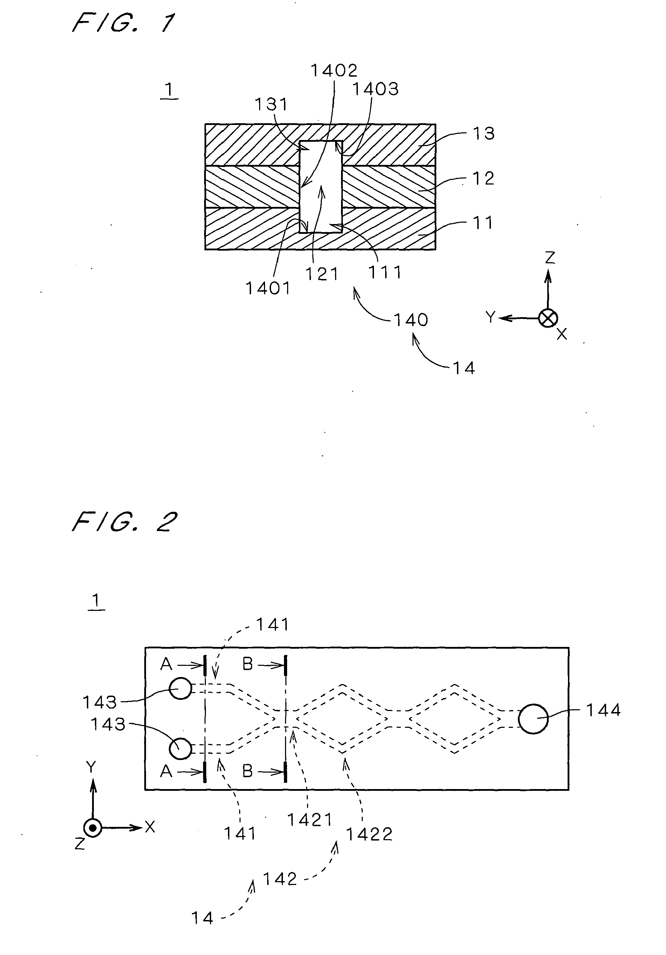

Fig. 1 is a cross section showing a basic structure of a micro channel structure 1 as the channel structure in accordance with the present invention. Fig. 1 is a view of the micro channel structure 1 sectioned by a plane perpendicular to a longitudinal direction of a micro channel 14 which is a channel formed inside the micro channel structure 1 (in other words, a flow direction of fluids flowing in the micro channel 14). As shown in Fig. 1, the micro channel structure 1 comprises a first substrate 11 serving as a base member which is the lowest substrate perpendicular to a predetermined layer direction (i.e., the Z direction of Fig. 1), an intermediate substrate 12 serving as an intermediate member layered on the first substrate 11 in the Z direction and a second substrate 13 directly layered on the intermediate substrate 12 on the side opposite to the first substrate 11. The first substrate 11, the intermediate substrate 12 and the second substrate 13 are plate-like (or sheet-like) members formed of the same metal material to have the same thickness of 100 µm or larger.

In the micro channel structure 1, a groove is formed by the first substrate 11 and the intermediate substrate 12 and an opening of the groove is closed by the second substrate 13 serving as a lid member to form the micro channel 14 in which fluids flow. Fig. 1 shows a cross section in a parallel part 140 which is part of the micro channel 14 in the longitudinal direction and parallel to the first substrate 11. The parallel part 140 is formed of a first recessed portion 111 and a second recessed portion 131 which are formed on the first substrate 11 and the second substrate 13, respectively, by isotropic etching and a through hole 121 formed in the layer direction in the intermediate substrate 12 by isotropic etching. The through hole 121 penetrates the intermediate substrate 12 in the layer direction. In the micro channel structure 1, the width of the parallel part 140 in the layer direction (hereinafter, referred to as "height") is made as large as or larger than twice the width in a direction orthogonal to the layer direction (i.e., the Y direction) (hereinafter, referred to as "lateral width").

As shown in Fig. 1, parts of an inner wall surface of the parallel part 140 on both ends in the Z direction (hereinafter, the part on the (-Z) side is referred to as "a lower end portion 1401 " and the part on the (+Z) side is referred to as "an upper end portion 1403") are present on the first substrate 11 and the second substrate 13, respectively. In other words, the lower end portion 1401 is a recessed surface which is an inner wall surface of the first recessed portion 111 formed on the first substrate 11, and the upper end portion 1403 is a recessed surface which is an inner wall surface of the second recessed portion 131 formed on the second substrate 13. Out of the inner wall surface of the parallel part 140, intermediate portions 1402 between the lower end portion 1401 and the upper end portion 1403 are formed of the through hole 121.

In the micro channel structure 1, there may be a structure in which a plurality of intermediate substrates 12 are layered between the first substrate 11 and the second substrate 13 and the parallel part 140 of the micro channel 14 is formed of the first recessed portion 111 of the first substrate 11, the through hole 121 which is so formed as to penetrate a plurality of intermediate substrates 12 and the second recessed portion 131 of the second substrate 13. Further, there may be another structure in which the second recessed portion 131 is not formed on the second substrate 13 and part of a plain main surface of the second substrate 13 on the (-Z) side serves as the upper end portion 1403 in the inner wall surface of the parallel part 140 (similarly as to the first substrate 11, the first recessed portion 111 may be omitted). In the micro channel structure 1, in a portion other than the parallel part 140 of the micro channel 14, a bottom surface and an upper surface of the micro channel 14 may be inclined to the horizontal plane (i.e., XY plane) to gradually increase (or decrease) the height of the micro channel 14 in the longitudinal direction.

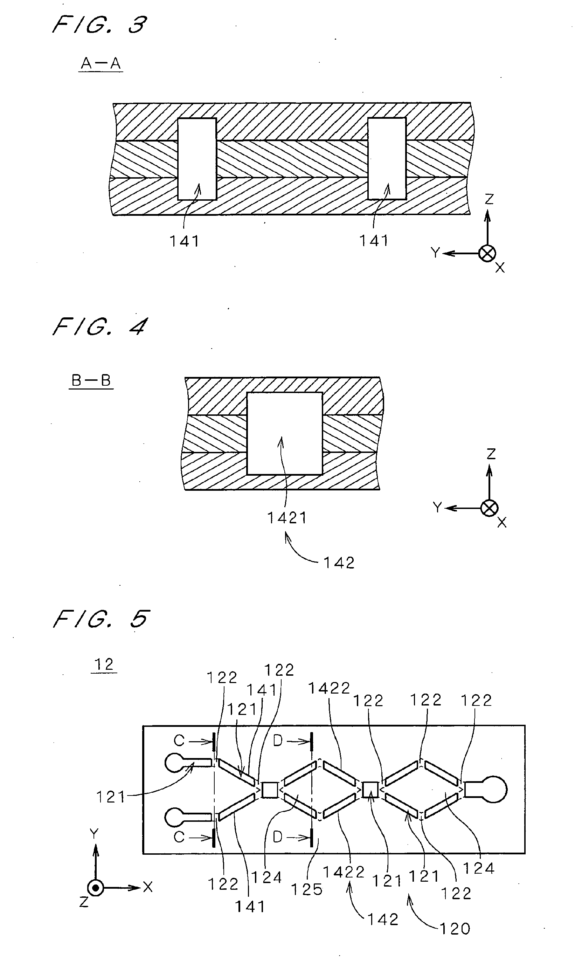

Next, a specific form of the micro channel structure 1 having the above basic structure will be discussed. Fig. 2 is a plan view showing the micro channel structure 1 in accordance with the first preferred embodiment of the present invention. The micro channel structure 1 is a microvessel used for mixture and reaction of two kinds of fluids and hereinafter, referred to as "a microreactor 1". The microreactor 1 has a triple-layered structure consisting of the first substrate 11, the intermediate substrate 12 and the second substrate 13, and the micro channel 14 indicated by the broken lines in Fig. 2 is formed by these substrates.

As shown in Fig. 2, the microreactor 1 comprises two supply ports 143 on the (-X) side of the micro channel 14, from which two kinds of very small quantity of fluids are supplied, respectively, and one exhaust port 144 on the (+X) side of the micro channel 14, from which the fluids passing the micro channel 14 are exhausted. The micro channel 14 comprises two supply channels 141 for passing the fluids supplied from the two supply ports 143 formed on the main surface of the microreactor 1 on the (+Z) side, respectively, and a mixture channel 142 connected to the two supply channels 141, for passing a mixed fluid of the two fluids.

In the mixture channel 142, part of the channel is divided into two, as shown in Fig. 2. Hereinafter, the divided parts of the mixture channel 142 are referred to as "divided parts 1422" and the part other than those is referred to as "a joined part 1421". In the mixture channel 142, the efficiency of mixing the two kinds fluids is improved by repeating dividing and joining the mixed fluid. The mixed fluid after passing the mixture channel 142 which is part of the micro channel 14 is exhausted from the exhaust port 144 formed on the main surface of the microreactor 1 on the (+Z) side.

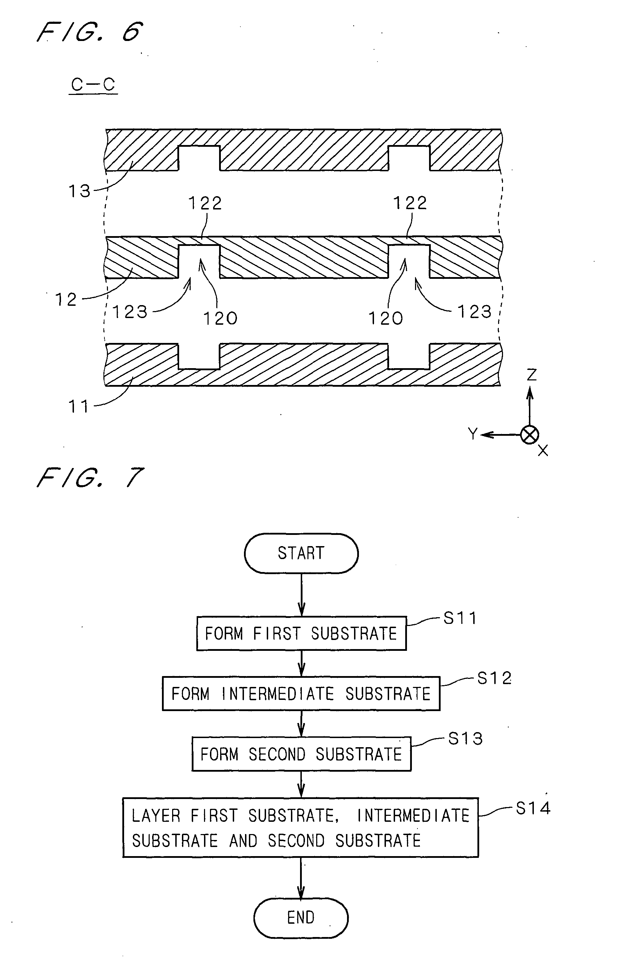

In the microreactor 1, each of the two divided channels, i.e., the supply channels 141, serves as the parallel part 140 parallel to the first substrate 11 and the mixture channel 142 connected to the two supply channels 141 serves as another parallel part 140 parallel to the first substrate 11. Figs. 3 and 4 are partially sectional views of part of the microreactor 1 sectioned by planes perpendicular to the supply channels 141 and the joined part 1421 of the mixture channel 142 (in other words, perpendicular to the X direction) at the positions A-A and B-B of Fig. 2, respectively. The sectional shape of the divided part 1422 of the mixture channel 142 is the same as that of the supply channel 141 shown in Fig. 3, and the respective intervals of two channels are different from each other.

In the microreactor 1, cross-sectional areas of the supply channel 141 and the joined part 1421 are so determined as to substantially equalize the resistance on the fluid flowing in each of the supply channels 141 and that on the fluid flowing in the joined part 1421 of the mixture channel 142 (the same applies to that of the divided part 1422). This determination of the cross-sectional area is made, however, on the precondition that the lateral width and the height of the channel should not become extremely small. As shown in Figs. 3 and 4, the lateral width of the joined part 1421 of the mixture channel 142 is larger than that of each of the supply channels 141 (and each of the divided parts 1422 of the mixture channel 142). The total lateral width of the two supply channels 141 is equal to or smaller than that of the joined part 1421 of the mixture channel 142, and the height of each of the supply channels 141 is equal to or larger than that of the joined part 1421 (the same applies to the two divided parts 1422).

As a result, before and after division of the micro channel 14, it is possible to suppress variation in resistance on the fluids flowing in the micro channel 14 and reduce the lateral width occupied by the supply channels 141 serving as a plurality of divided channels (including the lateral width of the gap of the two supply channels 141). Similarly, it is possible to reduce the lateral width occupied by the two divided parts 1422 of the micro channel 14. Thus, in the microreactor 1, with the cross-sectional area for each part in the micro channel 14 determined by free combination of the lateral width and the height of each part, it is possible to reduce the lateral width of the micro channel 14 as necessary and achieve an arrangement with high density.

Fig. 5 is a plan view showing the intermediate substrate 12 of the microreactor 1 viewed from the (+Z) side. As shown in Fig. 5, the intermediate substrate 12 comprises a channel area 120 including the through hole 121 which penetrates the intermediate substrate 12 in the Z direction to form part of the micro channel 14, and a plurality of connecting portions 122 for connecting parts on both sides of the channel area 120 in a predetermined position in the longitudinal direction of the micro channel 14.

Fig. 6 is a partially sectional view of the microreactor 1 sectioned by a plane orthogonal to the X direction at a position corresponding to C-C of Fig. 5. In Fig. 6, for easy understanding, the first substrate 11, the intermediate substrate 12 and the second substrate 13 are shown, being exploded. As shown in Fig. 6, an opening 123 of the channel area 120 of the intermediate substrate 12 on the (-Z) side is closed by the first substrate 11. The connecting portion 122 is a plate-like part thinner than the parts on both sides (the (+Y) and (-Y) sides) of the channel area 120 where the connecting portion 122 is provided, and a main surface of the connecting portion 122 on the (+Z) side is positioned on the same plane as main surfaces on the (+Z) side of the parts on both sides of the channel area 120.

As shown in Fig. 5, in the intermediate substrate 12, a portion held by the channel areas 120 which correspond to the two supply channels 141 is connected by a plurality of connecting portions 122 (three in this preferred embodiment) to portions outside the supply channels 141. An isolated portion 124 of substantial rhombus, held by the channel areas 120 which correspond to the two divided parts 1422 of the mixture channel 142, is independent from a peripheral portion 125 around the isolated portion 124 and connected to the peripheral portion 125 by only a plurality of connecting portions 122 (four in this preferred embodiment). In other words, the isolated portion 124 and the peripheral portions 125 which are independent member elements of the intermediate substrate 12, interposing the connecting portions 122 therebetween. The isolated portion 124 includes one of the parts on both sides of the channel area 120 where the connecting portions 122 are provided, and the peripheral portion 125 includes the other of the parts on both sides of the channel area 120. If the isolated portion 124 is small (for example, the isolated portion 124 has almost the same size as that of the connecting portion 122) and so on, the isolated portion 124 may be connected to the peripheral portion 125 by only one connecting portion 122.

Fig. 7 is a flowchart showing process steps for manufacturing the microreactor 1. In manufacturing the microreactor 1, first, metal plates for the first substrate 11, the intermediate substrate 12 and the second substrate 13 (in other words, these are materials before process to become the respective substrates and hereinafter, referred to as "raw materials") are prepared. The three raw materials are formed of the same metal materials and have the same thickness.

After the raw materials are prepared, a photoresist is applied to both main surfaces of one raw material and exposure and development are performed on the main surface on the (+Z) side to form a resist layer in an area other than an etching area corresponding to the first recessed portion 111. After that, an isotropic etching is performed on the etching area to form the first recessed portion 111 and then the resist layer is removed from the raw material to form the first substrate 11 (Step S11).

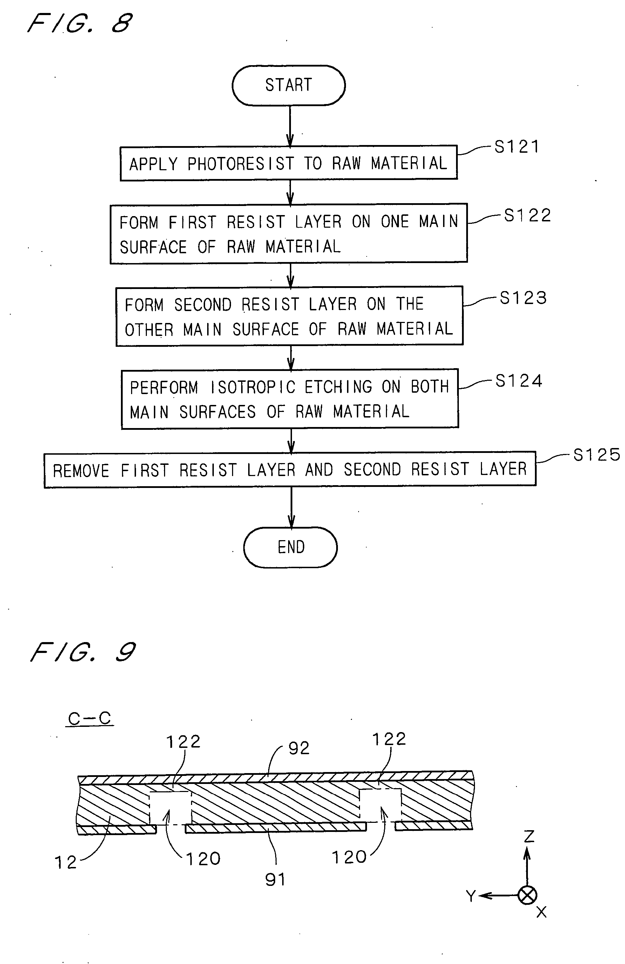

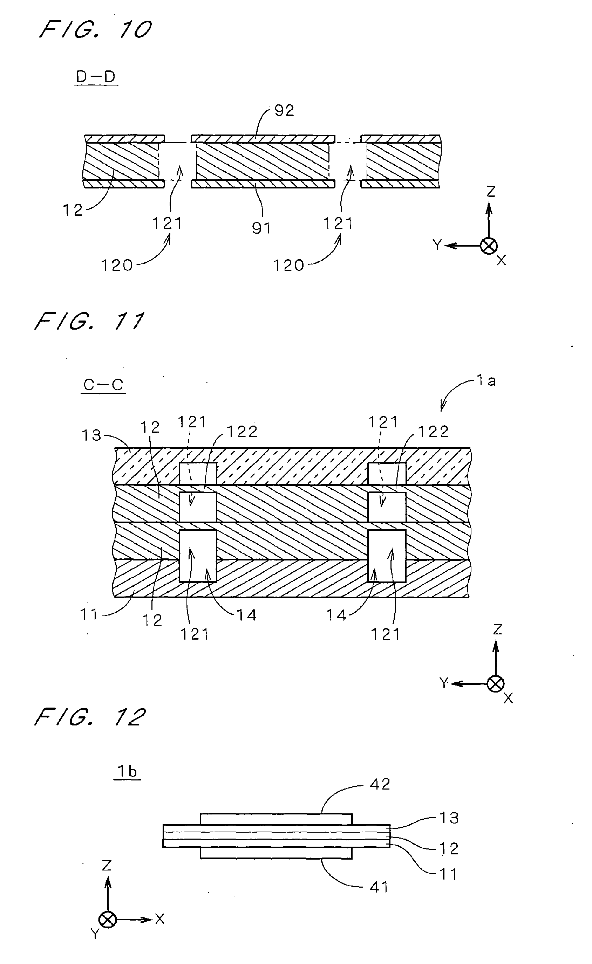

After the first substrate 11 is formed, another raw material is processed to form the intermediate substrate 12 (Step S12). Fig. 8 is a flowchart showing process steps for forming the intermediate substrate 12. Figs. 9 and 10 are partially sectional views each showing the intermediate substrate 12 which is being formed, and show the cross section of the intermediate substrate 12 at the positions C-C and D-D of Fig. 5, respectively. Hereafter, the process steps for forming the intermediate substrate 12 will be discussed, referring to Figs. 8 to 10.

In forming the intermediate substrate 12, first, a photoresist is applied to both main surfaces of the raw material (Step S121). Subsequently, exposure and development are performed for the photoresist on the main surface of the raw material on the (-Z) side, and as shown in Figs. 9 and 10, a first resist layer 91 is formed in an area other than the channel area 120 (Step S122). Further, exposure and development are performed for the photoresist on the main surface of the raw material on the (+Z) side, and a second resist layer 92 is formed in an area other than the channel area 120 and areas which correspond to the connecting portions 122 (Step S123).

The forming of the first resist layer 91 and the second resist layer 92 may be performed by exposure on the main surfaces of the raw material on the (-Z) and (+Z) sides at the same time or sequentially and then development of the both main surfaces at the same time or sequentially. The photoresist may be a positive-type one in which only part irradiated with light is removed in development or a negative-type one in which part irradiated with light is hardened and left in development. The exposure on the raw material may be irradiation with light through a mask having an opening pattern or may be performed by direct drawing where modulated optical beams are scanned and emitted, to directly draw a pattern.

After the first resist layer 91 and the second resist layer 92 are formed, a shower-like or misty etchant is applied to the raw material to perform an isotropic etching on areas on the both main surfaces other than the first resist layer 91 and the second resist layer 92, and parts indicated by two-dot chain lines in Figs. 9 and 10 are removed to form the channel areas 120 including the through holes 121 and the connecting portions 122 (Step S124). After that, the first resist layer 91 and the second resist layer 92 are removed from the raw material to completely form the intermediate substrate 12 (Step S125). Thus, in the process steps for forming the intermediate substrate 12, a plurality of connecting portions 122 can be easily formed concurrently with forming the through holes 121 by etching in forming the channel areas 120. Application of the etchant may be performed by immersing the raw material in the etchant.

After the intermediate substrate 12 is completely formed, like in Step S11, application of the photoresist, exposure, development, isotropic etching and removal of the resist layer are performed on another raw material, to form the second substrate 13 provided with the second recessed portion 131 in its main surface on the (-Z) side (Step S13). If the first substrate 11, the intermediate substrate 12 and the second substrate 13 are processed under the same condition, the respective steps of application of the photoresist, exposure, development and isotropic etching may be performed in one operation. After that, the intermediate substrate 12 is layered on the first substrate 11 and diffused junction of these substrates is performed to form a groove which is part of the micro channel 14, and further the second substrate 13 serving as a lid member for closing an opening of the groove is directly layered on the intermediate substrate 12 (on the side opposite to the first substrate 11) and diffused junction of these substrates is performed to form the microreactor 1 provided inside with the micro channel 14 whose height is as large as or larger than twice the lateral width (Step S14). The junction of those substrates may be performed by adhesive or plate-like seal.

As discussed above, since a cantilever-like portion held by the channel areas 120 which correspond to the two supply channels 141 is connected to portions outside the supply channels 141 with a plurality of connecting portions 122 in the intermediate substrate 12 of the microreactor 1, it is possible to prevent the cantilever-like portion from being deformed in handling the intermediate substrate 12 such as layering the intermediate substrate 12 on the first substrate 11. Since the isolated portion 124 and the peripheral portion 125 which are independent from each other are connected to each other with a plurality of connecting portions 122, it is possible to prevent part of the intermediate substrate 12 from being separated. As a result, in forming and handling the intermediate substrate 12, it is possible to easily handle the intermediate substrate 12 as one member without being fixed to an etching resistance sheet or the like and simplify the process for manufacturing the microreactor 1.

In the microreactor 1, by layering the intermediate substrate 12 provided with the through holes 121 between the first substrate 11 and the second substrate 13, it is possible to easily form the micro channel 14 having a small lateral width and a large height by using an isotropic etching. Since a plurality of thin raw materials are etched to form the through holes 121 and the like and these raw materials are layered to form the micro channel 14, the amount of etching for each raw material is reduced and the micro channel 14 can be formed for a shorter time as compared with a case where the micro channel having the same height is formed in one thick raw material. Further, since the first substrate 11 serving as the bottom member and the second substrate 13 serving as the lid member are provided with the first recessed portion 111 and the second recessed portion 131 which form part of the micro channel 14, respectively, the microreactor 1 can be made thinner for the required height of the micro channel 14.

In the microreactor 1, since the first substrate 11, the intermediate substrate 12 and the second substrate 13 have the same thickness and are formed of the same metal material, the same transfer condition such as bending and extension can be used for these substrates in manufacturing the microreactor 1. As a result, it is possible to simplify the apparatus for manufacturing the microreactor 1. By determining the thickness of each substrate to be 100 µm or more, the uniformity in pressure to be applied to the substrates is improved and the substrates can be more reliably joined in diffused junction of the substrates. As a result, it is possible to prevent a leak of fluids from the micro channel 14.

In a mixing process performed in factories or the like, if the total amount of fluids to be processed is large, usually, the channel is expanded in accordance with the total amount of fluids, but in the case of the microreactor 1, since the body is thin, a lot of microreactors 1 which are layered one after another can be used. This prevents a change of the mixing condition in mass production and it is thereby possible to maintain the quality of the mixed fluid. This also allows size-reduction of facilities used for the mixing process.

Fig. 11 is a partially sectional view showing a microreactor 1a in accordance with the second preferred embodiment of the present invention. The shape of the microreactor 1a viewed from the (+Z) side toward the (-Z) side is the same as that of the microreactor 1 shown in Fig. 2, and Fig. 11 shows a cross section of the microreactor 1a sectioned at a position corresponding to C-C of Fig. 5. As shown in Fig. 11, the microreactor 1a comprises two intermediate substrates 12 are formed between the first substrate 11 and the second substrate 13. The structural features other than the above are the same as those of the first preferred embodiment and the constituents are represented by the same reference signs. The process steps for manufacturing the microreactor 1a is the same as that of the first preferred embodiment except that the steps for forming the intermediate substrate 12 are performed twice to form the two intermediate substrates 12, and discussion thereof will be omitted.

In the microreactor 1a, the second substrate 13 is formed of a translucent material (e.g., grass) and serves as a lid member to close the openings on the (+Z) side of the groove formed by the first substrate 11 and the two intermediate substrates 12. As compared with the first preferred embodiment, the second substrate 13 is indirectly layered on one intermediate substrate 12 which is layered on the first substrate 11, on the side opposite to the first substrate 11 (i.e., on the (+Z) side), with another intermediate substrate 12 interposed therebetween. The three substrates other than the second substrate 13 are formed of the same metal material to have the same thickness like in the first preferred embodiment.

In the microreactor 1a, the fluids in the micro channel 14 can be irradiated with light through the second substrate 13. Therefore, the microreactor 1a is suitable for a vessel for photoreaction of sample fluids. In the microreactor 1a, it is further possible to visually observe the fluids in the micro channel 14.

In the microreactor 1a, like in the first preferred embodiment, since the connecting portions 122 are provided in both the two intermediate substrates 12, it is possible to prevent parts of the intermediate substrates 12 from being separated and easily handle each of the intermediate substrates 12 as one member in forming and handling the intermediate substrates 12, and as a result, the process steps for manufacturing the microreactor 1a can be simplified.

In the microreactor 1a, since the two intermediate substrates 12 provided with the through holes 121 are layered between the first substrate 11 and the second substrate 13, it is possible to easily form the micro channel 14 having a small lateral width and a large height by isotropic etching, and since part of the micro channel 14 are formed on the first substrate 11 and the second substrate 13, it is possible to make the microreactor 1a thinner. Further, it is possible to reduce the lateral width occupied by a plurality of divided channels (the supply channels 141 and the divided parts 1422 of the mixture channel 142) while suppressing variation in resistance on the fluids flowing in the micro channel 14 before and after division of the micro channel 14, and the micro channels 14 can be therefore arranged with high density by reducing the lateral width thereof as necessary.

In the microreactor 1a, since the first substrate 11 and the two intermediate substrates 12 have the same thickness and are formed of the same metal material, it is possible to simplify the apparatus for manufacturing the microreactor 1a. By determining the thickness of each of the first substrate 11 and the two intermediate substrates 12 to be 100 µm or more, it is possible to reliably join the first substrate 11 and the two intermediate substrates 12.

Fig. 12 is an elevational view showing a microreactor 1b in accordance with the third preferred embodiment of the present invention. The microreactor 1b has the same structural features as those in the first preferred embodiment except it further comprises permanent magnets 41 and 42, and the constituent thereof are represented by the same reference signs in the following discussion.

As shown in Fig. 12, the permanent magnets 41 and 42 are provided on the (-Z) of the first substrate 11 and on the (+Z) sides of the second substrate 13, respectively, and opposed to each other, holding the first substrate 11, the intermediate substrate 12 and the second substrate 13 therebetween. The opposed portions of the permanent magnets 41 and 42 have reverse polarities. Thus, in the microreactor 1b, the permanent magnets 41 and 42 serve as magnetic field generation parts for applying magnetic fields to at least part of the micro channel 14 (see Fig. 2) formed by the first substrate 11, the intermediate substrate 12 and the second substrate 13. The opposed portions of the permanent magnets 41 and 42 may have the same polarity.

In the microreactor 1b, the magnetic fields are applied to the fluids flowing in the micro channel 14 by the permanent magnets 41 and 42. As a result, the cluster size of the fluids can be reduced and it is therefore possible to improve reactivity of the fluids or reduce the resistance on the fluids from the inner wall surface of the micro channel 14 to smooth the flow of the fluids.

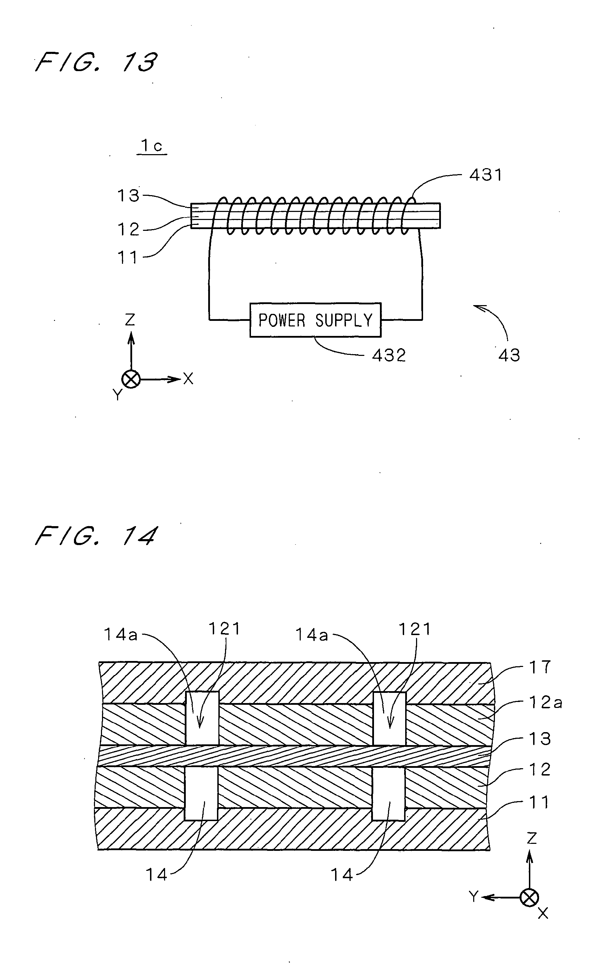

Fig. 13 is an elevational view showing a microreactor 1 c provided with an electromagnet 43 as the magnetic field generation part instead of the permanent magnets 41 and 42. As shown in Fig. 13, the electromagnet 43 comprises a coil 431 formed around the first substrate 11, the intermediate substrate 12 and the second substrate 13 and a power supply 432 connected to the coil 431. In the electromagnet 43, by supplying a direct current, an alternating current or a pulse current to the coil 431 from the power supply 432, a magnetic field is applied to at least part of the micro channel 14 (see Fig. 2).

In the microreactor 1c, since the magnetic field is applied to the fluids flowing in the micro channel 14 by the electromagnet 43, it is possible to reduce the cluster size of the fluids, like in the microreactor 1b shown in Fig. 12.

The magnetic field generation part may be have any of various structures other than the above. There may be another case where the magnetic field generation part is provided in a supply pipe and an exhaust pipe connected to the supply port 143 and the exhaust port 144 of the microreactor, respectively, and the magnetic field is applied to the fluids flowing in the supply pipe and the exhaust pipe.

Though the preferred embodiments of the present invention have been discussed above, the present invention is not limited to the above-discussed preferred embodiments, but allows various variations.

For example, each of the substrates constituting the microreactor may be formed of any of various materials, such as metal, glass, ceramic, silicon or resin. In the microreactor, various kinds of fluids are mixed. For example, two fluids of different compositions may be mixed, or two fluids of different states (e.g., gas phase and liquid phase) may be mixed. Further, three kinds of fluids or more may be mixed. The microreactor can be used for various purposes with mixture of fluids, such as a chemical reaction by mixture of a plurality of fluids, a simple mixture without chemical reaction, or atomization or bubbling by mixture of liquid and gas.

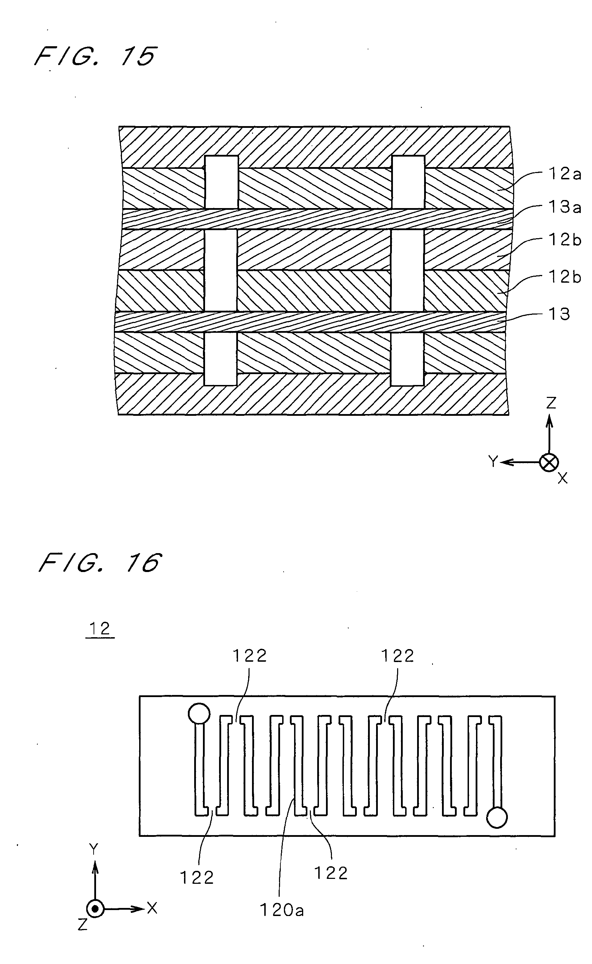

The micro channel structures of the above preferred embodiments are suitable for a microreactor used for mixture and reaction of two kinds of fluids, and can be used for a mixer part of a microfluidic analysis device or the like. By providing three or more supply ports for fluids, the micro channel structure may be used for mixture and reaction of three kinds of fluids or more. The micro channel structure can be used for any of various purposes, e.g., a fuel cell or the like. In a case where the micro channel structure is used as a fuel cell, as shown in Fig. 14, a functional membrane such as an ion exchange membrane as the second substrate 13 is layered on the first substrate 11 and the intermediate substrate 12 and a second intermediate substrate 12a having the through holes 121 and a fourth substrate 17 provided with a recessed portion are layered on the second substrate 13, to form a first micro channel 14 and a second micro channel 14a which are opposed to each other, holding the second substrate 13 therebetween. As shown in Fig. 15, by further providing two third intermediate substrates 12b and an ion exchange membrane 13a between the second substrate 13 and the second intermediate substrate 12a of the micro channel structure shown in Fig. 14, a micro channel structure may be formed to have a micro channel which is triple layered, holding the two ion exchange membranes.

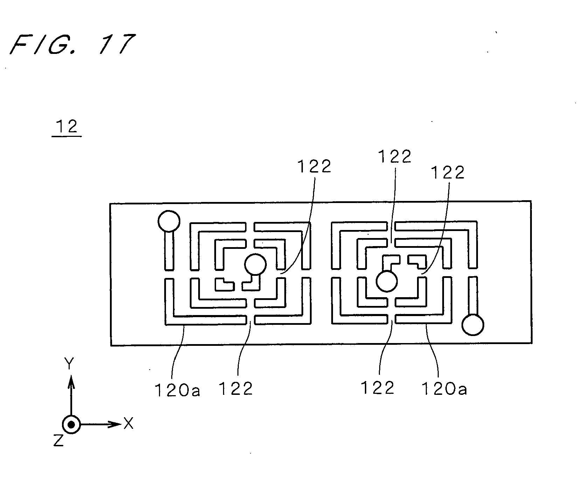

The shape and use of the micro channel 14 may be changed in various manners. Figs. 16 and 17 are plan views each showing the intermediate substrate 12 which has channel area 120a having a shape different from those in the above preferred embodiments. As shown in Fig. 16, in the intermediate substrate 12, a strip-like portion which is long in the Y direction and held by the meandering channel area 120a is connected to a peripheral portion with the connecting portion 122 and a main surface of the connecting portion 122 on the (+Z) side is positioned at the same plane as the main surface of the intermediate substrate 12 on the (+Z) side. As shown in Fig. 17, in a case where two independent convolute channel areas 120a are provided in the intermediate substrate 12, a portion surrounded by the channel area 120a is connected to a peripheral portion with a plurality of connecting portions 122. With this structure, it is possible to prevent a cantilever-like portion held by the convolute channel area 120a from being deformed in handling the intermediate substrate 12.

In the above preferred embodiments, though the whole opening of the channel area of the intermediate substrate on the (-Z) side is closed by the first substrate 11, the whole opening has not necessarily to be closed and part of the opening may be closed by the first substrate 11 as necessary and the other part may be opened. In a case where the supply port and the exhaust port for the fluids are provided on the side of the first substrate 11, for example, areas of the opening which correspond to the supply port and the exhaust port are opened and the other area is closed by the first substrate 11.

In the above preferred embodiments, though the micro channel structure provided inside with the micro channel has been discussed, in the channel structure of the present invention, the channel is not limited to a micro channel (e.g., having a height or a lateral width of about 0.1 mm to 2 mm) but a channel having a height or a lateral width of about 20 mm may be provided.

While the invention has been shown and described in detail, the foregoing description is in all aspects illustrative and not restrictive. It is therefore understood that numerous modifications and variations can be devised without departing from the scope of the invention.

## Claims

1. A channel structure having a groove which is closed by a lid member to form a channel, comprising:
a plate-like or sheet-like base member (11) perpendicular to a predetermined layer direction; and
a plate-like or sheet-like intermediate member (12) having a channel area (120) including a through hole (121) formed in said layer direction to form at least part of a groove, said intermediate member (12) being layered on said base member (11), whereby one opening (123) of said channel area (120) is closed, and **characterized in that**
said intermediate member (12) comprises a plate-like connecting portion (122) for connecting parts on both sides of said channel area (120) in a predetermined position in a longitudinal direction of said groove, and said connecting portion (122) is thinner than said parts on both sides.

2. The channel structure according to claim 1, wherein
said connecting portion (122) is formed by etching in forming said intermediate member (12) and one main surface of said connecting portion (122) is positioned on the same plane as main surfaces of said parts on both sides.

3. The channel structure according to claim 1 or 2, wherein
two independent member elements (124,125) including said parts on both sides, respectively, are connected only by at least one plate-like connecting portion (122) for connecting said parts on both sides, which is thinner than said parts on both sides.

4. The channel structure according to any one of claims 1 to 3, further comprising
a lid member (13) layered directly or indirectly on said intermediate member (12) on its side opposite to said base member (11), for closing an opening of said groove,
wherein said lid member (13) comprises a recessed portion (131) forming at least part of a channel (14) together with said groove.

5. The channel structure according to any one of claims 1 to 3, further comprising
a translucent lid member (13) layered directly or indirectly on said intermediate member (12) on its side opposite to said base member (11), for closing an opening of said groove.

6. The channel structure according to any one of claims 1 to 5, further comprising
a magnetic field generation part (41,42) for applying a magnetic field to at least part of said groove.

7. A method of manufacturing a channel structure having a groove which is closed by a lid member to form a channel, comprising the steps of:
forming a plate-like or sheet-like base member (11);
forming a plate-like or sheet-like intermediate member (12) having a channel area (120) including a through hole (121); and
forming at least part of said groove by layering said intermediate member (12) on said base member (11), whereby one opening (123) of said channel area (120) is closed, and **characterized in that**
said step of forming said intermediate member (12) comprises the steps of
forming a first resist layer (91) in an area other than said channel area (120) on one main surface of a material before process;
forming a second resist layer (92) in an area other than said channel area (120) and an area corresponding to a plate-like connecting portion (122) for connecting parts on both sides of said channel area (120) in a predetermined position in a longitudinal direction of said channel area (120) on the other main surface of said material, said connecting portion (122) being thinner than said parts on both sides;
etching areas other than said first resist layer (91) and said second resist layer (92) on both main surfaces of said material; and
removing said first resist layer (91) and said second resist layer (92) from said material.
